(19) Europäisches Patentamt / European Patent Office / Office européen des brevets

(11) **EP 4 266 407 A1**

(12) **EUROPEAN PATENT APPLICATION**
published in accordance with Art. 153(4) EPC

(43) Date of publication:
**25.10.2023 Bulletin 2023/43**

(21) Application number: **21911357.8**

(22) Date of filing: **13.12.2021**

(51) International Patent Classification (IPC):
$H01M\ 4/36$ (2006.01)     $H01M\ 4/525$ (2010.01)
$H01M\ 4/505$ (2010.01)     $H01M\ 4/62$ (2006.01)
$C01G\ 53/00$ (2006.01)     $H01M\ 10/052$ (2010.01)

(52) Cooperative Patent Classification (CPC):
C01G 53/00; H01M 4/36; H01M 4/505;
H01M 4/525; H01M 4/62; H01M 10/052

(86) International application number:
**PCT/KR2021/018831**

(87) International publication number:
**WO 2022/139290 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.12.2020  KR 20200179584**

(71) Applicants:
• **POSCO Holdings Inc.**
  **Seoul 06194 (KR)**
• **RESEARCH INSTITUTE OF INDUSTRIAL
  SCIENCE &
  TECHNOLOGY
  Pohang-si, Gyeongsangbuk-do 37673 (KR)**

• **POSCO Chemical Co., Ltd
  Gyeongsangbuk-do 37918 (KR)**

(72) Inventors:
• **NAM, Sang Cheol
  Seoul 02587 (KR)**
• **CHOI, Kwon Young
  Seoul 07987 (KR)**
• **SONG, Jung Hoon
  Gwacheon-si, Gyeonggi-do 13835 (KR)**
• **LEE, Sanghyuk
  Incheon 22405 (KR)**

(74) Representative: **Potter Clarkson
  Chapel Quarter
  Mount Street
  Nottingham NG1 6HQ (GB)**

(54) **POSITIVE ACTIVE MATERIAL FOR RECHARGEABLE LITHIUM BATTERY, METHOD OF PREPARING SAME, AND RECHARGEABLE LITHIUM BATTERY INCLUDING SAME**

(57) The present exemplary embodiments provide a positive electrode active material, a manufacturing method thereof, and a lithium secondary battery including the same. The positive electrode active material according to an exemplary embodiment is a metal oxide particle including a center and a surface portion positioned on the surface of the center, but the metal oxide particle is composed of a single particle, and the surface portion includes a film in which no peak is observed during XRD measurement.

**【FIG. 1】**

## Description

### Field of the Invention

The present exemplary embodiments relate to a positive electrode active material for a lithium secondary battery, a manufacturing method thereof, and a lithium secondary battery including the same.

### Description of the Related Art

Recently, due to the explosive demand for electric vehicles and the demand for increased mileage, the development of secondary batteries with high-capacity and a high energy density that can be applied to them is actively progressing worldwide.

To satisfy these requirements, NCM positive electrode material with high Ni content is used. At the same time, in order to improve the density of electrode plates, research on secondary batteries using bimodal positive electrode active materials in which large and small particles are mixed in a certain fraction is active.

However, in the form of a positive electrode material composed of secondary particles in which primary particles are aggregated, the specific surface area of the powder is large, and the area in contact with the electrolyte solution is wide, so there is a high possibility of gas generation, and there is a problem of cycle-life degradation due to this.

In addition, since the strength of the secondary particle is weak, there is a problem that the small particle is broken into a primary particle shape during the rolling process, and this also causes a problem in that the cycle-life characteristic is deteriorated.

To solve this problem, a method of increasing the size of the primary particle is proposed.

However, the primary particles whose size is increased in this way are not easy to disintegrate due to the increase in cake strength. In addition, even after disintegration, there is a problem that particle uniformity is deteriorated because a large amount of fine powder and coarse powder exist.

Therefore, the development of a technology capable of improving particle uniformity while increasing the size of primary particles is required.

### SUMMARY OF THE INVENTION

In the present embodiment, since there are trace amounts of fine powder and coarse powder, we intend to provide a positive electrode active material with excellent particle uniformity and particle strength, a manufacturing method of positive electrode active material, and a lithium secondary battery.

The positive electrode active material according to an exemplary embodiment is a metal oxide particle including a center and a surface portion positioned on the surface of the center, composed of single particle, and wherein, the surface portion includes a film in which no peak is observed during XRD measurement.

The film contains a compound of amorphous structure.

The compound of amorphous structure contains carbon and lithium.

The surface portion includes an amorphous structure and a rock salt structure.

The core contains a layered structure.

A particle strength of the metal oxide particle is 291 MPa or more.

A grain size of the metal oxide particle ranges from 2,500 Å to 5,000 Å.

A specific surface area (BET) of the metal oxide particle is less than 0.35 m/g.

Based on the entire positive electrode active material, the ratio of particles with an average particle diameter of $2\mu m$ or less is 2.5% or less.

Based on the entire positive electrode active material, the ratio of particles with an average particle diameter of $10\mu m$ or more is 3% or less.

A D50 particle diameter of the metal oxide particle is 5.5 $\mu m$ or less.

The metal oxide particle contains nickel, cobalt, manganese and a doping element.

The doping element is one or more selected from the group consisting of Zr, Al, B, P, La, Ta, Ti, W, Mo, Si, Ga, Zn, Nb, Ag, Sn, Bi, Au, Y, Ge, V, Cr, and Fe.

A content of the doping element ranges from 0.0005 mole to 0.04 mole, based on 1 mole of the total of the nickel, cobalt, manganese and the doping element.

The doping element include Zr and Al.

A content of the Zr ranges from 0.001 mole to 0.01 mole, based on 1 mole of the total of the nickel, cobalt, manganese and the doping element.

A content of the Al ranges from 0.001 mole to 0.04 mole, based on 1 mole of the total of the nickel, cobalt, manganese and the doping element.

A content of nickel in the metal oxide particle is 0.8 mol or more, based on 1 mol of the total of the nickel, cobalt and manganese.

Another exemplary embodiment provides a manufacturing method of positive electrode active material, comprising:

preparing a metal salt aqueous solution containing nickel raw material, cobalt raw material, manganese raw material and water; obtaining a metal hydroxide by supplying the metal salt aqueous solution to a co-precipitation reactor; obtaining a lithium metal oxide by mixing the metal hydroxide, a lithium raw material, a doping raw material and a boron compound and then sintering them; and washing with water after disintegrating the sintered lithium metal oxide.

In the step of obtaining the lithium metal oxide, the boron compound is mixed by inputting it in the range of 0.003 mole to 0.03 mole based on 1 mole of the total of nickel, cobalt, manganese and the doping element in the finally obtained positive electrode active material.

In the step of obtaining the lithium metal oxide, a molar ratio (Li/Me) of lithium (Li) to the entire metal (Me) excluding lithium ranges from 1.01 to 1.1.

In the step of obtaining the lithium metal oxide, the sintering is performed for 10 hours to 24 hours in the 830 °C to 890 °C range.

After disintegrating the sintered lithium metal oxide and washing with water, a step of secondary sintering by mixing the washed lithium metal oxide and lithium raw material and then sintering them, is further comprised.

The step of secondary sintering is performed for 3 hours to 10 hours at 730°C to 800°C range.

In the step of the secondary sintering, a mixing amount of the lithium raw material ranges from 0.3g to 5g based on 100g of the washed lithium metal oxide.

In addition, a lithium secondary battery according to another exemplary embodiment includes a positive electrode including a positive electrode active material according to an exemplary embodiment; negative electrode; and non-aqueous electrolytes.

The positive electrode active material manufactured according to the manufacturing method of the positive electrode active material according to the present embodiment is composed of single particles, is very easy to disintegrate, and has almost little fine powder and coarse powder, and thus has excellent particle uniformity.

In addition, since the positive electrode active material has a very high particle strength, the rolling rate can be increased during electrode formation, and consequently a lithium secondary battery with high energy density can be realized.

In addition, when the positive electrode active material is applied, the cycle-life of the lithium secondary battery is increased, the resistance increase rate is low, and the thermal stability can be improved.

## BRIEF DESCRIPTION OF THE DRAWINGS

FIG. 1 is a schematic diagram for explaining a manufacturing method of a positive electrode active material composed of single particle according to an exemplary embodiment.

FIG. 2 schematically shows the conventional manufacturing method of a positive electrode active material composed of single particle.

FIG. 3a is an SEM analysis result measured by a magnification of 10,000 times for the positive electrode active material of Example 1.

FIG. 3b is a SEM analysis result obtained by measuring the positive electrode active material of Example 1 at a magnification of 1,000 times.

FIG. 4 is a SEM analysis result measured by a magnification of 1,000 times for the positive electrode active material of Comparative Example 2.

FIG. 5 is an image measurement result using HRTEM (High resolution transmission electron microscope) equipment for the positive electrode active material manufactured according to exemplary embodiment 1.

FIG. 6 shows the image of the diffraction pattern by FFT (Fast Fourier transform) conversion of the A area of FIG. 5.

FIG. 7 shows the image of the diffraction pattern by FFT (Fast Fourier transform) conversion of the B area of FIG. 5.

FIG. 8 shows the image of the diffraction pattern by FFT (Fast Fourier transform) conversion of the C area of FIG.5.

FIG. 9 is an image measurement result using HRTEM (High resolution transmission electron microscope) equipment for the positive electrode active material manufactured according to Comparative Example 1.

FIG. 10 shows the image of the diffraction pattern by FFT (Fast Fourier transform) conversion of the area A in FIG. 9.

FIG. 11 shows the image of the diffraction pattern by FFT (Fast Fourier transform) conversion of the B area of FIG.9.

FIG. 12 shows a cross-section image after milling the positive electrode active material prepared in Example 1 with FIB.

FIG. 13 to FIG. 17 shows the element mapping analysis result for the positive electrode active material manufactured according to Example 1 for each element.

FIG. 18 is a cross-section analysis result obtained by analyzing the positive electrode active material prepared according to exemplary embodiment 1 with STEM analysis equipment.

FIG. 19 shows the EELS analysis result for area A of FIG. 15.

FIG. 20 shows the EELS analysis result for area B of FIG. 15.

FIG. 21 shows the EELS analysis result for area C of FIG. 15.

## DETAILED DESCRIPTION OF THE EMBODIMENTS

The terms such as first, second, and third are used to describe various portions, components, regions, layers, and/or sections, but various parts, components, regions, layers, and/or sections are not limited to these terms. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

Terminologies as used herein are to mention only a specific exemplary embodiment, and are not to limit the present invention. Singular forms used herein include plural forms as long as phrases do not clearly indicate an opposite meaning. The term "including/comprising" as used herein concretely indicates specific characteristics, regions, integer numbers, steps, operations, elements, and/or components, and is not to exclude presence or addition of other specific characteristics, regions, integer numbers, steps, operations, elements, and/or components.

When any portion is referred to as being "above" or "on" another portion, any portion may be directly above or on another portion or be above or on another portion with the other portion interposed therebetween. In contrast, when any portion is referred to as being "directly on" another portion, the other portion is not interposed between any portion and another portion.

Unless defined otherwise, all terms including technical terms and scientific terms as used herein have the same meaning as the meaning generally understood by a person of an ordinary skill in the art to which the present invention pertains. Terms defined in a generally used dictionary are additionally interpreted as having the meaning matched to the related art document and the currently disclosed contents and are not interpreted as ideal or formal meaning unless defined.

The positive electrode active material according to an exemplary embodiment is a metal oxide particle including a center and a surface portion positioned on the surface of the center, composed of single particle, and wherein, the surface portion includes a film in which no peak is observed during XRD measurement.

In the metal oxide particle, the surface portion means a region corresponding to a depth of 1 nm to 30 nm from the outermost surface of the metal oxide particle.

A film formed in an island shape can be positioned on the surface portion.

The film may include an amorphous compound. More specifically, the compound of the amorphous structure may include carbon and lithium.

In the metal oxide particle of the present embodiment, the central portion may include a layered structure, and the surface portion may include an amorphous structure and a rock salt structure. That is, the surface portion may include a structure in which an amorphous structure and a halite structure are mixed.

The metal oxide particle is composed of single particle. In this specification, a single particle may mean a primary particle, or it may mean a form in which the size is increased by combining several primary particles with a small average particle diameter.

In the positive electrode active material of the present embodiment, the ratio of particles having an average particle diameter of 2 $\mu$m or less, based on the entire positive electrode active material, is 2.5% or less, more specifically, 0.1% to 2.5%, 0.1% to 2.3%, 0.2% to 2%, or 0.2% to 1.5%.

In addition, the ratio of particles having an average particle diameter of 10 $\mu$m or more may be 3% or less, more specifically in the range of 0.2% to 3%, 0.2% to 2.8%, or 0.3% to 2.7%.

The D50 particle diameter of the metal oxide particle may be 5.5 $\mu$m or less, more specifically, 3.5 $\mu$m to 5.5 $\mu$m, 3.5 $\mu$m to 5.3 $\mu$m, 3.7 $\mu$m to 5 $\mu$m, or 3.7 $\mu$m to 4.8 $\mu$m.

In this embodiment, in order to prevent the performance of the NCM positive electrode active material having a high nickel content from deteriorating, it is possible to provide a positive electrode active material having a uniform particle size distribution with very little fine powder and coarse powder. In increasing the size of the primary particles, this can be achieved using a general pulverization device without additionally expensive pulverization equipment or multiple pulverization processes.

Therefore, the ratio of particles with an average particle diameter of 2 $\mu$m or less and particles with an average particle diameter of 10 $\mu$m or more satisfies the range, and simultaneously the D50 particle diameter of metal oxide particles can satisfy the range. At this time, a positive electrode active material having excellent electrochemical characteristics can be implemented.

In the present embodiment, the particle intensity of the metal oxide particle may be 291 MPa or more, more specifically, 291 MPa to 450 MPa, 300 MPa to 450 MPa, 305 MPa to 400 MPa, or 315 MPa to 400 MPa range. If the particle strength is more than 300MPa, the rolling rate can be further improved when manufacturing electrodes using the positive electrode active material. Accordingly, a lithium secondary battery with excellent energy density can be realized.

In addition, a grain size of the metal oxide particle may range from 2,500 Å to 5,000 Å, more specifically from 2,600 Å to 4,900 Å, from 2,650 Å to 4,800 Å, or from 2,900 Å to 4,800 Å. When the crystal grain size satisfies the range, a content of residual lithium can be reduced and the cycle-life characteristics of the battery can be improved.

The specific surface area (BET) of the metal oxide particle is less than 0.35 m$^2$/g, more specifically 0.05 m$^2$/g to 0.35 m$^2$/g, 0.05 m$^2$/g to 0.30 m$^2$/g, 0.05 m$^2$/g to 0.29 m$^2$/g, 0.07 m$^2$/g to 0.28 m$^2$/g, or 0.07 m$^2$/g to 0.20 m$^2$/g. If the BET value satisfies the range, if a battery is implemented using this, it has a very advantageous effect because the gas generation amount can be significantly deteriorated during charging and discharging.

Meanwhile, the metal oxide particle may include nickel, cobalt, manganese and a doping element. The doping element may be one or more selected from the group consisting of Zr, Al, B, P, La, Ta, Ti, W, Mo, Si, Ga, Zn, Nb, Ag, Sn, Bi, Au, Y, Ge, V, Cr, and Fe. A content of the doping element may range from 0.0005 mole to 0.04 mole or 0.001 mole to 0.03 mole based on 1 mole of the total sum of the nickel, cobalt, manganese and doping elements. At this time, the doping element means the doping amount of the doping element included in the finally obtained positive electrode active material.

In positive electrode active materials, selection of doping elements is important to secure cycle-life and various electrochemical performances. In the present embodiment, the characteristics of the positive electrode active material can be improved by applying various doping elements as described above.

In the present embodiment, the doping element may include Zr and Al.

Zr serves as a kind of pillar because Zr ions occupy the Li site, and it relieves the contraction of the lithium ion path during the charging and discharging process to bring about stabilization of the layered structure. This phenomenon can increase cycle-life by reducing cation mixing and increasing lithium diffusion coefficient.

In addition, Al ions move to the tetragonal lattice site to suppress deterioration of the layered structure into a spinel structure in which lithium ions do not move smoothly.

The content of the Zr, based on 1 mole of the total of the nickel, cobalt, manganese and doping elements, ranges from 0.001 mole to 0.01 mole, more specifically, from 0.0016 mole to 0.0064 mole, 0.0017 mole to 0.0055 mole or 0.002 mole to 0.005 mole. When the Zr doping amount satisfies the range, it is possible to reduce the high temperature resistance increase rate and simultaneously secure excellent cycle-life characteristics.

The Al content ranges from 0.001 mole to 0.04 mole, more specifically, from 0.004 mole to 0.028 mole, 0.0045 mole to 0.027 mole or 0.0055 mole to 0.025 mole, based on 1 mole of the total of the nickel, cobalt, manganese and doping elements. If the Al doping amount satisfies the range, high temperature cycle-life and thermal stability can be further improved.

The content of nickel in the metal oxide particle of the present embodiment may be 0.8 mol or more based on 1 mol of the nickel, cobalt and manganese. More specifically, the nickel content may range from 0.8 to 0.99, 0.85 to 0.99, and 0.88 to 0.99.

As in the present embodiment, when the content of nickel among metals in lithium metal oxide is 80% or more, a positive electrode active material having a high power characteristic can be implemented. Since the positive electrode active material of the present exemplary embodiment having such a composition has a high energy density per volume, it can improve the capacity of a battery to which it is applied, and is also very suitable for use in an electric vehicle.

Another exemplary embodiment provides a manufacturing method of positive electrode active material, comprising:

preparing a metal salt aqueous solution containing nickel raw material, cobalt raw material, manganese raw material and water; obtaining a metal hydroxide by supplying the metal salt aqueous solution to a co-precipitation reactor; obtaining a lithium metal oxide by mixing the metal hydroxide, a lithium raw material, a doping raw material and a boron compound and then sintering them; and washing with water after disintegrating the sintered lithium metal oxide.

It can be performed the step of supplying the metal salt aqueous solution to a co-precipitation reactor to obtain a metal hydroxide, after preparing a metal salt aqueous solution containing nickel raw material, cobalt raw material, manganese raw material and water, according to a positive electrode active material precursor manufacturing method generally known in the art.

In the present embodiment, in the step of obtaining lithium metal oxide by sintering,
the metal hydroxide particle, lithium raw material and doping raw material are mixed, but an excessive amount of lithium raw material is added and mixed, and the boron compound is simultaneously mixed.

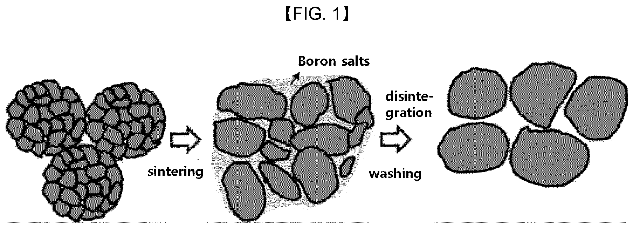

FIG. 1 is a schematic diagram for explaining a manufacturing method of a positive electrode active material composed of single particle according to an exemplary embodiment.

Referring to FIG. 1, in the present embodiment, an excessive amount of lithium raw material and boron compound are injected in the process of manufacturing a positive electrode active material, helping to easily cause over-sintering.

The lithium raw material forms a precursor and an oxide. At this time, excess lithium reacts with boron to form lithium borate, a type of boron salt.

In the over-sintering process, lithium borate exists in the process of sintering between primary particles, which plays a role in weakening the binding force between primary particles. Accordingly, separation between primary particles of increased size, that is, single particles, is easily achieved during the disintegration process after sintering. Therefore, it is possible to manufacture a single particle active material having a low ratio of fraction of fine and coarse, that is, excellent uniformity, even using general disintegration equipment, without using expensive disintegration equipment or going through several disintegration processes.

Since these lithium borates are well soluble in water, they can be naturally removed along with residual lithium in the water washing process to be described later.

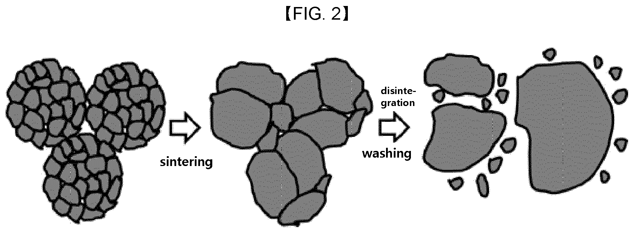

FIG. 2 schematically shows the conventional manufacturing method of a positive electrode active material composed of single particle.

Referring to FIG. 2, in the prior art, the primary particles whose size is increased have an increased cake strength, making it difficult to disintegrate, and even if disintegrated, a large amount of fine and coarse particles exist.

However, in the case of manufacturing the positive electrode active material according to the manufacturing method of the present exemplary embodiment as described above, since the disintegration process is easy, it is possible to manufacture a positive electrode active material composed of single particles in which little fine and coarse powders are present.

Specifically, in the step of obtaining the lithium metal oxide, the boron compound is mixed by adding it in the mole to 0.003 mol to 0.03 mol, or 0.007 mol to 0.028 mole, based on 1 mol of the total of nickel, cobalt, manganese and doping elements in the finally obtained positive electrode active material.

In addition, in the step of obtaining the lithium metal oxide, the molar ratio (Li/Me) of lithium (Li) to the entire metal (Me) excluding lithium may be in the range of 1.01 to 1.1, or 1.03 to 1.08.

When the input amount of boron compound and Li/Me satisfy the range, lithium and boron react sufficiently to form lithium borate.

Meanwhile, in the step of obtaining the lithium metal oxide, the sintering may be performed for 10 hours to 24 hours in the range of 820 °C to 890 °C, or 830 °C to 880 °C. When the sintering temperature and time conditions satisfy the range, particle growth in the form of single particles is achieved.

Next, a step of washing with water after disintegrating the sintered lithium metal oxide is performed.

As described above, disintegration can be performed using conventional general disintegration equipment. In addition, the step of washing with water is to remove residual lithium present on the surface, and may be performed using, for example, distilled water.

Next, after the step of disintegrating the sintered lithium metal oxide and washing with water, a step of secondary sintering by mixing the washed lithium metal oxide and lithium raw material and then sintering them, is further comprised.

When going through the step of secondary sintering, it has the effect of compensating for lithium deficient due to the rock salt structure of the surface generated in the sintering process and lithium deficient from proton exchange in the water washing process.

The secondary sintering step may be performed for 3 hours to 10 hours at 730 °C to 800 °C, or 740 °C to 780 °C. If the secondary sintering process satisfies the condition, it can lower the initial resistance.

In the secondary sintering step, the mixing amount of the lithium raw material may range from 0.3g to 5g or 1g to 4g based on 100g of the washed lithium metal oxide. When the mixing amount of the raw material for lithium satisfies the range, the performance of the positive electrode active material can be finally improved by compensating for the lack of lithium on the surface.

In another exemplary embodiment, it provides a lithium secondary battery comprising:
a positive electrode including a positive electrode active material according to one embodiment of the present invention, a negative electrode including a negative electrode active material, and an electrolyte positioned between the positive electrode and the negative electrode.

A description related to the positive electrode active material will be omitted because it is the same as that of an exemplary embodiment described above.

The positive electrode active material layer may include a binder and a conductive material.

The binder serves to attach the positive electrode active material particles well to each other and to attach the positive electrode active material to the current collector well.

The conductive material is used to impart conductivity to the electrode, and any electronic conductive material can be used without causing chemical change in the battery.

The negative electrode includes a current collector and a negative electrode active material layer formed on the current collector, and the negative electrode active material layer includes a negative electrode active material.

The negative electrode active material includes a material capable of intercalating/deintercalating lithium ions reversibly, lithium metal, an alloy of lithium metal, a material capable of doping and undoping lithium, or a transition metal oxide.

A material that can intercalate/deintercalate the lithium ion reversibly is a carbon material. In a lithium ion secondary battery, any generally-used carbon-based negative electrode active material can be used, and typical examples thereof are crystalline carbon and amorphous carbon, or combination thereof.

The alloy of the lithium metal is alloy of lithium and metal selected from the group consisting of Na, K, Rb, Cs, Fr, Be, Mg, Ca, Sr, Si, Sb, Pb, In, Zn, Ba, Ra, Ge, Al and Sn.

Materials capable of doping and undoping the lithium include Si, $SiO_x$ (0 < x < 2), Si-Y alloy (the Y is an element selected from the group consisting of an alkali metal, an alkaline earth metal, a group 13 element, a group 14 element, a transition metal, and a rare earth, and its combination thereof, but not Si), Sn, $SnO_2$, Sn-Y (the Y is an element selected from the group consisting of an alkali metal, an alkaline earth metal, a group 13 element, a group 14 element, a transition metal, a rare earth element and the combination thereof, not Sn), and the like.

Examples of the transition metal oxide include vanadium oxide and lithium vanadium oxide. The negative electrode active material layer also includes a binder and may optionally further include a conductive material.

The binder serves to attach the negative electrode active material particles well to each other and to attach the negative electrode active material to the current collector well.

The conductive material is used to impart conductivity to the electrode, and any electronic conductive material can be used without causing chemical change in the battery.

As the current collector, one selected from the group consisting of copper foil, nickel foil, stainless steel foil, titanium foil, nickel foam, copper foam, a conductive metal-coated polymer substrate, and a combination thereof may be used.

The negative electrode and positive electrode are prepared by mixing active material, conductive material and binder in a solvent to prepare an active material composition, and applying this composition to a current collector. Since such an electrode manufacturing method is widely known in the field, detailed description will be omitted in this specification. As the solvent, N-methylpyrrolidone and the like can be used, but is not limited thereto.

The electrolyte contains a non-aqueous organic solvent and a lithium salt.

The non-aqueous organic solvent serves as a medium through which ions involved in the electro chemical reaction of the battery can move.

The lithium salt is a material that dissolves in an organic solvent and acts as a supply source of lithium ion in the battery to enable basic operation of the lithium secondary battery and promotes the movement of lithium ion between the positive electrode and the negative electrode.

Depending on the type of lithium secondary battery, a separator may exist between the positive electrode and the negative electrode. As such a separator, polyethylene, polypropylene, polyvinylidene fluoride or a multilayer of two or more of these may be used, and polyethylene/polypropylene 2-layer separator, a mixed multilayer such as a polyethylene/polypropylene/polyethylene 3-layer separator, polypropylene/polyethylene/polypropylene 3-layer separator, can be used.

Lithium secondary batteries can be classified into lithium ion batteries, lithium ion polymer batteries and lithium polymer batteries according to the type of separator and electrolyte used, and can be classified into cylindrical, prismatic, coin-type, and pouch-type depending on the shape. It can be divided into bulk type and thin film type according to size. Since the structures and manufacturing methods of these batteries are well known in this field, detailed descriptions are omitted.

Hereinafter, an exemplary embodiment will be described in detail. However, this is presented as an example, and the present invention is not limited thereby, and the present invention is only defined by the range of claims to be described later.

**Exemplary embodiment 1 - B 0.01 mol + Zr 0.0035 mol + Al 0.0085 mol**

**(1) Precursor Preparation**

A precursor was prepared by a general co-precipitation method.

$NiSO_4·6H_2O$ was used as the nickel raw material, $CoSO_4·7H_2O$ as the cobalt raw material, and $MnSO_4·H_2O$ as the manganese raw material. These raw materials were dissolved in distilled water to prepare a metal salt aqueous solution.

After preparing the co-precipitation reactor, $N_2$ was purged to prevent oxidation of metal ions during the co-precipitation reaction, and the temperature of the reactor was maintained at 50°C.

$NH_4(OH)$ was added to the co-precipitation reaction as a chelating agent, and NaOH was used for pH control. The precipitate obtained by the co-precipitation process was filtered, washed with distilled water, and then dried in an oven at 100°C to prepare a positive electrode active material precursor.

**EP 4 266 407 A1**

The composition of the prepared precursor was $(Ni_{0.92}Co_{0.04}Mn_{0.04})(OH)_2$, and the average particle diameter D50 was about 4 $\mu$m.

### (2) Manufacture of positive electrode active material

339g of the precursor prepared in the (1) was weighed with 161g of $LiOH \cdot H_2O$, 2.3g of $H_3BO_3$, 2.45g of $Al(OH)_3$, and 1.59g of $ZrO_2$, and a uniformly mixed into a box-shaped sintering furnace. And then them were sintered with oxygen inflow of 1,000mL/min. The sintering was performed at 830-890 °C for 24 hours.

At this time, the molar ratio (Li/Me) of lithium (Li) to all metal (Me) excluding lithium was designed to be 1.05, and B is also added so as to be 0.01 mole based on the total 1 mole of nickel, cobalt, manganese and doping elements of the finally obtained positive electrode active material.

The sintered material was pulverized using an air classifying mill (ACM), washed with water to remove residual lithium on the surface, and then dried for 12 hours.

Next, about 2.3 g of $LiOH \cdot H_2O$ (0.053 mol) per 100 g of the dried positive electrode active material was mixed and heat treated under an oxygen atmosphere to prepare a positive electrode active material of Example 1 consisting of single particles. Heat treatment was performed at 730-800 °C for 5 hours.

### Exemplary embodiment 2 to 16

A positive electrode active material was manufactured by the same method as in Example Embodiment 1, except that the input amount of the boron compound and the doping material was adjusted as shown in Table 1 below in the sintering process when manufacturing the positive electrode active material.

### Comparative Example 1

339 g of the precursor prepared in the 1 was weighed with 161 g of $LiOH \cdot H_2O$, 2.45 g of $Al(OH)_3$, and 1.59 g of $ZrO_2$, and a uniformly mixed. And then the mixture was sintered in a box-shaped sinter furnace with an oxygen inflow of 1,000 mL/min. The sinter was performed at 830-890°C for 24 hours.

At this time, the molar ratio (Li/Me) of lithium (Li) to the entire metal (Me) excluding lithium was designed to be 1.05.

The sintered material was pulverized using an air classifying mill (ACM), washed with water to remove residual lithium on the surface, and then dried for 12 hours.

Next, the dried positive electrode active material was heat treated under an oxygen atmosphere to prepare a positive electrode active material of Comparative Example 1 composed of single particles containing rock salt structures on the surface. Heat treatment was performed at 730-800 °C for 5 hours.

### Comparative Example 2

A positive electrode active material composed of single particles was manufactured by the same method as in Example 1, except that boron compound was not added in the sintering process when manufacturing the positive electrode active material.

### Comparative Example 3

After preparing the precursor by the same method as 1 of exemplary embodiment 1, the precursor was weighed with 161 g of $LiOH \cdot H_2O$, 2.45 g of $Al(OH)_3$, and 1.59 g of $ZrO_2$ to 339 g of the precursor, and a uniformly mixed. And then the mixture was sintered in a box-shaped sinter furnace with oxygen inflow of 1,000 mL/min. The sintering was performed for 24 hours at 730 - 760°C. At this time, the molar ratio (Li/Me) of lithium (Li) to the entire metal (Me) excluding lithium was designed to be 1.01.

The sintered material was pulverized using an air classifying mill (ACM), washed with water to remove residual lithium on the surface, and then dried for 12 hours.

Next, about 2.3 g of $LiOH \cdot H_2O$ (0.053 mol) per 100 g of the dried positive electrode active material was mixed and heat treated under an oxygen atmosphere to prepare a positive electrode active material of Comparative Example 2 composed of secondary particles in which primary particles are aggregated. Heat treatment was performed at 730-750 °C for 5 hours.

[Table 1]

| Category | Sintering process | | | |
|---|---|---|---|---|
| | Li/Me ratio | B(mol) | Zr(mol) | Al(mol) |
| exemplary embodiment1 | 1.05 | 0.01 | 0.0035 | 0.0085 |
| exemplary embodiment2 | 1.05 | 0.01 | 0.003 | 0.0085 |
| exemplary embodiment3 | 1.05 | 0.01 | 0.002 | 0.0085 |
| Comparative Example 1 | 1.05 | 0.01 | 0.0015 | 0.0085 |
| exemplary embodiment4 | 1.05 | 0.01 | 0.005 | 0.0085 |
| Comparative Example 2 | 1.05 | 0.01 | 0.0065 | 0.0085 |
| exemplary embodiment5 | 1.05 | 0.01 | 0.0035 | 0.015 |
| exemplary embodiment6 | 1.05 | 0.01 | 0.0035 | 0.025 |
| Comparative Example 3 | 1.05 | 0.01 | 0.0035 | 0.03 |
| exemplary embodiment7 | 1.05 | 0.01 | 0.0035 | 0.0055 |
| Comparative Example 4 | 1.05 | 0.01 | 0.0035 | 0.003 |
| exemplary embodiment8 | 1.05 | 0.007 | 0.0035 | 0.0085 |
| Comparative Example 5 | 1.05 | 0.003 | 0.0035 | 0.0085 |
| exemplary embodiment9 | 1.05 | 0.015 | 0.0035 | 0.0085 |
| exemplary embodiment10 | 1.05 | 0.02 | 0.0035 | 0.0085 |
| Comparative Example 6 | 1.05 | 0.03 | 0.0035 | 0.0085 |
| Comparative Example1 | 1.05 | - | 0.0035 | 0.0085 |
| Comparative Example2 | 1.05 | - | 0.0035 | 0.0085 |
| Comparative Example3 | 1.01 | - | 0.0035 | 0.0085 |

## Experimental Example 1 - Measuring particle size distribution

For the positive electrode active material prepared according to Exemplary Embodiment 1 to 10, Reference Example 1 to 6 and Comparative Example 1 to 3, particle size distribution was measured using the Particle Size Analyzer. The results are shown in Table 2 below.

[Table 2]

| Category | D50 ($\mu$m) | 2$\mu$m or less particle ratio (%) | 10$\mu$m) or more particle ratio (%) |
|---|---|---|---|
| exemplary embodiment1 | 4.32 | 0.72 | 0.85 |
| exemplary embodiment2 | 4.55 | 0.75 | 0.92 |
| exemplary embodiment3 | 4.51 | 0.82 | 0.89 |
| Comparative Example 1 | 4.56 | 0.88 | 0.88 |
| exemplary embodiment4 | 4.57 | 0.77 | 0.92 |
| Comparative Example 2 | 4.50 | 0.88 | 0.93 |
| exemplary embodiment5 | 4.51 | 0.85 | 0.92 |
| exemplary embodiment6 | 4.55 | 0.77 | 0.99 |
| Comparative Example 3 | 4.62 | 0.82 | 1.02 |
| exemplary embodiment7 | 4.36 | 0.78 | 0.89 |

(continued)

| Category | D50 ($\mu$m) | 2$\mu$m or less particle ratio (%) | 10$\mu$m) or more particle ratio (%) |
|---|---|---|---|
| Comparative Example 4 | 4.29 | 0.92 | 1.01 |
| exemplary embodiment8 | 4.78 | 0.85 | 2.55 |
| Comparative Example 5 | 5.32 | 1.34 | 2.76 |
| exemplary embodiment9 | 4.56 | 0.66 | 0.74 |
| exemplary embodiment10 | 4.67 | 0.54 | 0.52 |
| Comparative Example 6 | 4.66 | 0.52 | 0.41 |
| Comparative Example1 | 5.82 | 2.15 | 4.44 |
| Comparative Example2 | 5.85 | 2.62 | 4.65 |
| Comparative Example3 | 4.84 | 1.77 | 2.56 |

Referring to Table 2, in the case of Exemplary Embodiments 1 to 10 in which a boron compound was introduced along with an excessive amount of lithium raw material during sintering, it can be seen that the particle size distribution of the manufactured positive electrode active material is very uniform.

On the other hand, it can be confirmed that the positive electrode active material of Comparative Example 1 and 2, which does not use a boron compound, has a very high ratio of fine and coarse powder compared to the exemplary embodiments.

Referring to the results in Table 2, it can be seen that boron injected during sinter has a very large effect on the particle uniformity of the positive electrode active material.

**Experimental Example 2 - SEM Analysis**

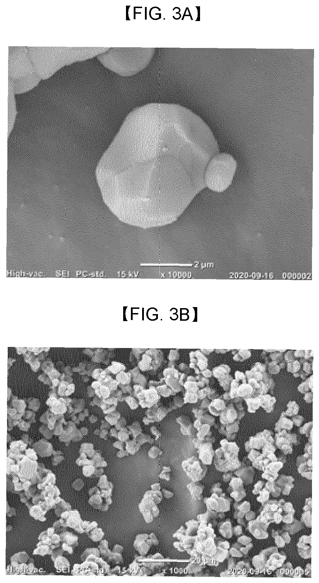

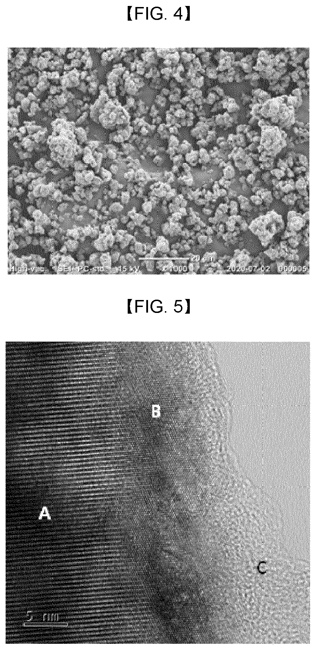

SEM analysis was performed on the positive electrode active material prepared according to exemplary embodiment 1 and Comparative Example 2 and shown in FIG 3A, FIG 3B and FIG 4.

FIG. 3a is an SEM analysis result measured by a magnification of 10,000 times for the positive electrode active material of Example 1. FIG. 3b is a SEM analysis result obtained by measuring the positive electrode active material of Example 1 at a magnification of 1,000 times.

FIG. 4 is a SEM analysis result measured by a magnification of 1,000 times for the positive electrode active material of Comparative Example 2.

Referring to FIG 3A, it can be seen that the positive electrode active material manufactured according to embodiment 1 is composed of one particle, that is, a single particle. In addition, referring to FIG 3B, it can be confirmed that the single particle shape is uniform, and the size is also very uniform without fine powder and coarse powder. On the other hand, referring to FIG 4, it can be seen that there are relatively more fine powder and coarse powder than FIG 3B.

As the present embodiment, a positive electrode active material having excellent particle size uniformity, that is, containing almost little fine powder and coarse powder, can be used as a bimodal positive electrode active material in the future.

When an electrode is manufactured using such a bimodal positive electrode active material, the energy density can be increased by improving the rolling ratio of the electrode.

**Experimental Example 3 - particle characteristic evaluation**

**(1) Specific surface area measurement**

For the positive electrode active material prepared in Exemplary Embodiment and Comparative Example, the specific surface area was measured using BET measuring equipment (Micromeritics TriStar II 3020).

**(2) Particle intensity measurement**

Particle intensity was measured using particle intensity measurement equipment (Fisherscope HM2000) for the positive electrode active material prepared in Example Embodiment and Comparative Example.

**(3) XRD measurements**

For the positive electrode active material prepared in the exemplary embodiment and comparative example, X-ray diffraction measurement was performed using CuKα.

Using XRD equipment (Panalytical's X'pert3 powder diffraction), the peak intensity (peak area) of (003) and (104) and the intensity of (110) were measured at a scan speed (°/s) of 0.328. From this result, I(003)/I(104) was obtained and shown in Table 3 below.

In addition, the R-factor was obtained according to Equation 1 below from the strength measurement results of the (006), (102) and (101) planes.

[Equation 1]

$$R\text{-factor}=\{I(006)+I(102)\}/I(101)$$

The crystalline size of the positive electrode active material was measured.

[Table 3]

| 구분 | D50 (μm) | Crystalline size (Å) | I(003)/I (104) | R-factor | BET (m²/g) | Particle strength (MPa) |
|---|---|---|---|---|---|---|
| exemplary embodiment1 | 4.32 | 3,835 | 1.16 | 0.462 | 0.16 | 320 |
| exemplary embodiment2 | 4.55 | 3,756 | 1.16 | 0.461 | 0.17 | 324 |
| exemplary embodiment3 | 4.51 | 3.777 | 1.15 | 0.456 | 0.17 | 323 |
| Comparative Example 1 | 4.56 | 3,753 | 1.16 | 0.464 | 0.18 | 325 |
| exemplary embodiment4 | 4.57 | 3,854 | 1.16 | 0.464 | 0.16 | 320 |
| Comparative Example 2 | 450 | 3,898 | 1.15 | 0.463 | 0.16 | 330 |
| exemplary embodiment5 | 4.51 | 3,840 | 1.16 | 0.456 | 0.17 | 320 |
| exemplary embodiment6 | 4.55 | 2,915 | 1.15 | 0.453 | 0.19 | 319 |
| Comparative Example 3 | 4.62 | 2,658 | 1.14 | 0.456 | 0.45 | 317 |
| exemplary embodiment7 | 4.36 | 4,124 | 1.17 | 0.458 | 0.16 | 340 |
| Comparative Example 4 | 4.29 | 4,335 | 1.18 | 0.461 | 0.15 | 342 |
| exemplary embodiment8 | 4.78 | 3,888 | 1.16 | 0.461 | 0.16 | 315 |
| Comparative Example 5 | 5.32 | 3,945 | 1.15 | 0.462 | 0.17 | 300 |
| exemplary embodiment9 | 4.56 | 3,742 | 1.16 | 0.461 | 0.16 | 325 |
| exemplary embodiment10 | 4.67 | 3,436 | 1.17 | 0.464 | 0.15 | 330 |
| Comparative Example 6 | 4.66 | 3,138 | 1.17 | 0.463 | 0.15 | 340 |
| Comparative Example1 | 5.82 | 2,330 | 1.16 | 0.488 | 0.36 | 290 |
| Comparative Example2 | 5.85 | 2,350 | 1.18 | 0.482 | 0.37 | 290 |
| Comparative Example3 | 4.84 | 1,100 | 1.18 | 0.492 | 1.12 | 120.4 |

Referring to Table 3, it can be seen that the positive electrode active materials of Example Embodiments 1 to 10 have an average grain size of at least 2500 Å or more, which is significantly increased overall compared to Comparative Example 1 to 3. This means that crystallization proceeded better at the same sintering temperature. In this way, when the positive electrode active material of the well-crystallized embodiment is applied to a lithium secondary battery, it is very advantageous in that the cycle-life characteristics of the battery can be improved and residual lithium can be reduced.

In addition, it can be confirmed that the specific surface area (BET) of exemplary embodiments 1 to 10 is less

than 0.35 m$^2$/g, significantly reduced compared to Comparative Example 3 manufactured in the form of secondary particles. As such, since the positive electrode active material of the present exemplary embodiment has a very low BET value, it can significantly deteriorate the amount of gas generated during cell charging and discharging, so it has a very advantageous effect.

Next, it can be seen that the particle intensity of the positive electrode active material according to Examples 1 to 10 is increased to 291 MPa or more compared to Comparative Example 1 to 3. Particularly, it increased more than 2.5 times compared to Comparative Example 3 manufactured in the form of secondary particles. In this way, when a lithium secondary battery is implemented using a positive electrode active material having excellent particle strength, the rolling ratio of the electrode can be improved, and thus the energy density of the battery can be increased.

**Experimental Example 4 - electrochemical evaluation**

**(1) coin-type half-cell fabrication**

After manufacturing a CR2032 coin cell using the positive electrode active material manufactured as described above, an electrochemical evaluation was conducted.

Positive electrode active material, Denka black conductive material, and polyvinylidene fluoride binder (trade name: KF1120) were mixed at a weight ratio of 96.5:1.5:2, and this mixture was added to N-Methyl-2-pyrrolidone solvent to have a solid content of about 30 wt% to prepare a positive electrode active material slurry.

The slurry was coated on aluminum foil (Al foil, thickness: 15 $\mu$m), which is a positive electrode current collector, using a doctor blade (Doctor blade), dried, and rolled to prepare a positive electrode. The loading amount of the positive electrode was 15 mg/cm$^2$, and the rolling density was 3.4 g/cm$^3$.

A 2032 coin-type half cell was prepared by a conventional method using the positive electrode, lithium metal negative electrode (300$\mu$m, MTI), electrolyte solution and polypropylene separator. The electrolyte solution is the product obtained by dissolving 1M LiPF$_6$ in a mixed solvent of ethylene carbonate (EC), dimethyl carbonate (DMC) and ethylmethyl carbonate (EMC) (mixing ratio EC:DMC:EMC=3:4:3 volume ratio), and 3 wt% of vinylene carbonate was added to 100 wt% of the entire solution.

**(2) Evaluation of charge and discharge characteristics**

After aging the prepared coin-type half cell at room temperature 25 °C for 10 hours, charging and discharging were performed.

The capacity evaluation was based on 205mAh/g, and the charge and discharge conditions were constant current (CC) / constant voltage (CV) 2.5V to 4.25V, and 1/20C cut-off. For initial capacity, discharge capacity was measured after 0.1C charge/0.1C discharge, and initial efficiency was calculated after 0.2C charge/0.2C discharge.

**(3) Cycle-life characteristic measurement**

The high temperature cycle-life characteristic was measured 30 times in 0.3C charge/0.3C discharge condition at high temperature 45°C.

**(4) Resistance characteristic measurement**

The room temperature initial resistance (DC internal resistance: Direct current internal resistance (DC-IR)) is the constant current-constant voltage 2.5V to 4.25V at 25°C, 1/20C cut-off condition, 0.2C charging and 0.2 discharge discharge was performed once, and the voltage value was measured 60 seconds after applying the discharge current at 4.25V charge 100%, and then it was calculated.

The resistance increase rate is measured in the same way as the initial resistance measurement method after 30 cycle compared to the resistance initially measured at room temperature 25°C (room temperature initial resistance), and the increase rate is converted into percentage (%).

**(5) Thermal stability evaluation**

In the differential scanning calorimetry (DSC) analysis, after charging the half cell from the initial 0.1C charging condition to 4.25V, the half cell is disassembled to obtain only the positive electrode separately, and the positive electrode is washed 5 times with dimethyl carbonate. After impregnation of the positive electrode washed in the crucible for DSC with electrolyte solution, while raising the temperature to 265 °C, the DSC peak temperature and calorific value result obtained by measuring the caloric change using Mettler Toledo's DSC1 star system as a DSC device.

[Table 4]

| Category | room temperature resistance ($\Omega$) | High temperature resistance increase rate (%) | 0.1C discharge capacity (mAh/g) | 2C/ 0/1C (%) | cycle-life (%) | DSC (°C) |
|---|---|---|---|---|---|---|
| exemplary embodiment1 | 28.1 | 66.2 | 203.3 | 90.1 | 95.4 | 230 |
| exemplary embodiment2 | 28.3 | 66.8 | 203.4 | 90 | 95.3 | 230 |
| exemplary embodiments | 28.3 | 67.7 | 203.7 | 90.2 | 95.2 | 230 |
| Reference example 1 | 28.1 | 70.4 | 203.9 | 90.1 | 93.2 | 230 |
| exemplary embodiment4 | 28 | 65.2 | 201.4 | 89.9 | 95.3 | 230 |
| Reference example 2 | 28.5 | 64.1 | 195.3 | 89.8 | 95.3 | 230 |
| exemplary embodiment5 | 28.8 | 66.2 | 203.1 | 90.2 | 95.3 | 231 |
| exemplary embodiment6 | 29.1 | 65.5 | 202.5 | 90.1 | 95.2 | 232 |
| Reference example 3 | 29.1 | 62.1 | 197.1 | 90.1 | 95.4 | 234 |
| exemplary embodiment7 | 27.7 | 66.3 | 203.3 | 89.8 | 94.7 | 228 |
| Reference example 4 | 26.6 | 67.1 | 203.6 | 89.6 | 94.1 | 226 |
| exemplary embodiment8 | 28.2 | 66.4 | 204.2 | 89.9 | 95.2 | 229 |
| Reference example 5 | 29.5 | 67.3 | 203.7 | 89.5 | 95.1 | 230 |
| exemplary embodiment9 | 27.5 | 66.2 | 203.1 | 90.1 | 95.0 | 230 |
| exemplary embodiment10 | 25.1 | 62.1 | 201.4 | 90.0 | 95.2 | 231 |
| Reference example 6 | 23.4 | 56.3 | 195.2 | 89.8 | 95.1 | 230 |
| Comparative Example1 | 38.2 | 98.1 | 203.3 | 89.9 | 93.3 | 230 |
| Comparative Example2 | 33.1 | 98.1 | 204.4 | 88.3 | 87.3 | 230 |
| Comparative Example3 | 25.3 | 138.3 | 212.5 | 87.8 | 85.2 | 230 |

Table 4 is the result of evaluating the electrochemical characteristics measured for the positive electrode active material prepared while changing the mixing amount of the boron compound and the doping material during sintering.
Referring to Table 4, in the case of Reference Example 1 in which a small amount of Zr is doped, it can be seen that the high temperature resistance increase rate increases and the cycle-life characteristic deteriorates. In addition, in the case of Reference Example 2 in which Zr is excessively doped, it can be seen that the initial capacity is deteriorated.

In the case of Reference Example 3 in which Al is excessively doped, it can be seen that the initial capacity is deteriorated. In the case of Reference Example 4 in which Al is doped in a small amount, it can be seen that the cycle-life characteristic is deteriorated and the thermal stability is reduced.

In addition, in the case of Reference Example 6 in which an excessive amount of B was introduced during the manufacturing process, it can be seen that the initial capacity is deteriorated.

On the other hand, in Comparative Example 1, it can be seen that the initial resistance and the resistance increase rate are significantly increased.

In addition, it can be seen that Comparative Example 2 is generally inferior to the exemplary embodiments in initial resistance, cycle-life, and resistance increase rate. In addition, it can be seen that the positive electrode active material of Comparative Example 3, which is manufactured in the form of secondary particles in which primary particles are aggregated, that is, polycrystalline, has a very high resistance increase rate.

**Experimental Example 5 - Structure analysis of positive electrode active material**

For the positive electrode active material prepared according to exemplary embodiment 1, the image was measured using HRTEM (High resolution transmission electron microscope) equipment and shown in FIG 5.

Referring to FIG. 5, it can be seen that the central portion of the positive electrode active material is divided into A area and the surface portion is divided into B and C areas.

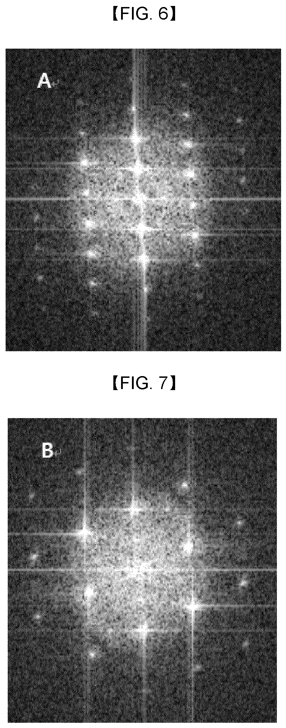

In the image of FIG. 5, FFT (Fast Fourier transform) was performed on the A, B, and C regions to obtain an image of the diffraction pattern, and the results are shown in FIG. 6 to FIG. 8.

Referring to FIG. 6, it can be seen that a layered structure (Rhombohedral, a = b = 0.28831 nm, c = 1.41991 nm) of a typical R-3m structure of $LiNiO_2$ (85-1966) is formed in the center of the positive electrode active material.

Referring to FIG 7, it can be seen that a Rock salt structure (Cubic, a = b = c = 0.83532 nm) of Fm-3m structure of NiO (89-5881) with a thickness of about 5-10 nm is formed.

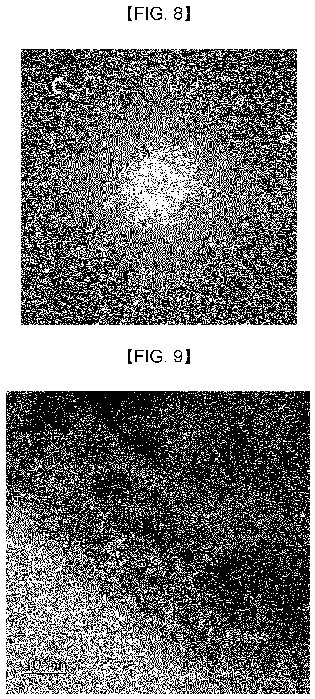

Referring to FIG. 8, it can be seen that an amorphous structure exists in region C.

That is, it can be confirmed that the center portion of the positive electrode active material prepared according to Example 1 includes a layered structure, and the surface portion includes an amorphous structure and a rock salt structure.

Next, for the positive electrode active material prepared according to Comparative Example 1, the image was measured using HRTEM (High resolution transmission electron microscope) equipment and shown in FIG 9.

Referring to FIG 9, it can be seen that the central portion of the positive electrode active material is divided into A area and the surface portion is divided into B area.

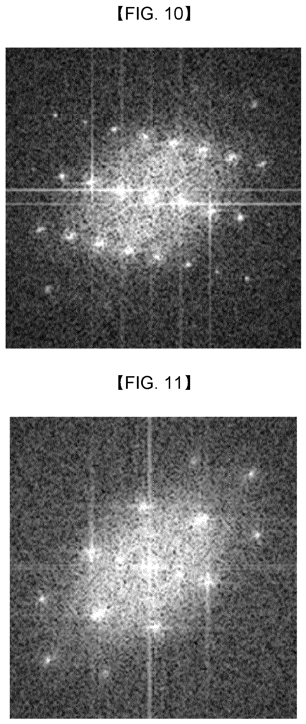

In the image of FIG. 9, FFT (Fast Fourier transform) was performed on the A and B regions to obtain an image of the diffraction pattern, and the results are shown in FIG. 10 and FIG. 11.

Referring to FIG 10, it can be seen that a layered R-3m structure (Rhombohedral, a = b = 0.28831 nm, c = 1.41991 nm) is formed in the center of the positive electrode active material of Comparative Example 1. Referring to FIG 11, it can be seen that a rock salt structure (Cubic, a=b=c=0.83532 nm) is formed on the surface of the positive electrode active material of Comparative Example 11.

**Experimental Example 6 - EDS analysis of particle internal components**

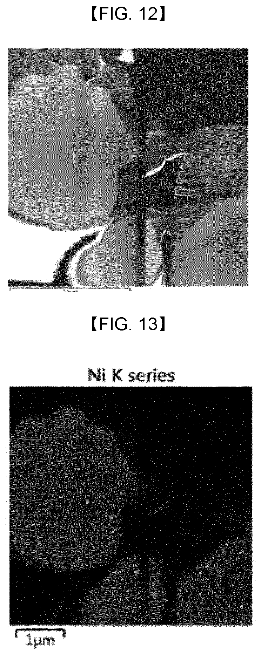

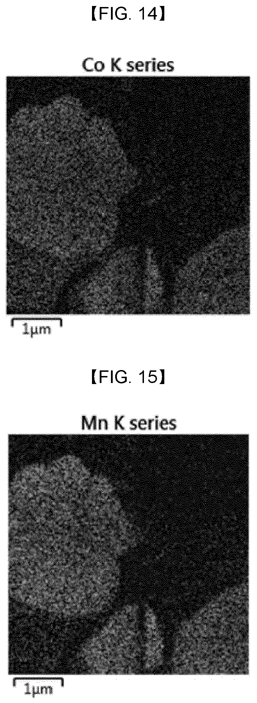

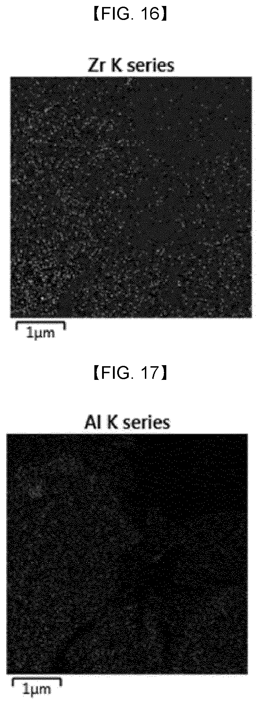

FIG. 12 shows a cross-section image after milling the positive electrode active material prepared in Example Embodiment 1 with FIB (Focused Ion Beam, SEIKO 3050SE). Next, in order to confirm the elements present inside the positive electrode active material, it was analyzed using EDS (Energy dispersed spectroscopy, Oxford X_max 100TLE) analysis equipment, and the results were shown in FIG 13 to FIG 17.

Referring to FIG 13 to FIG 17, it can be seen that inside the positive electrode active material of Example Embodiment 1 composed of single particles, Ni, Co, Mn, and Zr and Al introduced as doping elements are uniformly distributed. However, B was not observed inside the positive electrode active material on elemental mapping.

**Experimental Example 7 - Lithium analysis using EELS for particle cross-section**

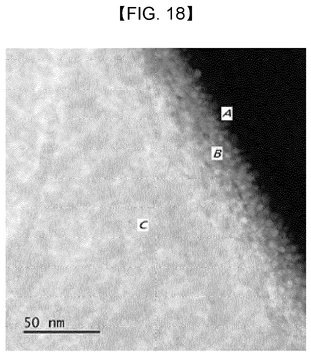

The cross-section of the positive electrode active material prepared in Example Embodiment 1 was cut with FIB (Focused Ion Beam, SEIKO 3050SE), and the cross-section analyzed with STEM (Scanning Transmission Electron Microscopy, JEOL ARM 200F) analysis equipment is shown in FIG. 18.

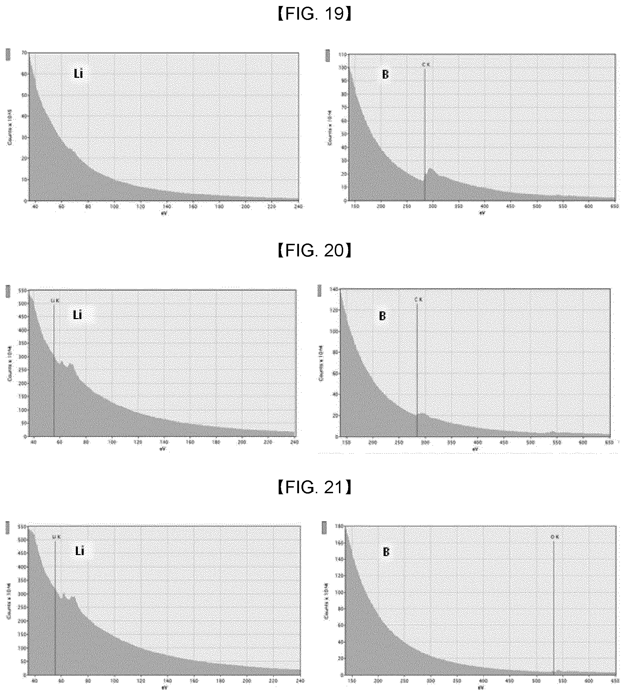

Next, in order to confirm the presence or absence of Li and B, the results of analysis using EELS (Electron Energy Loss Spectroscopy, GATAN GIF Quantum ER 965) equipment for A, B, and C regions indicated in FIG. 18 are shown in FIG. 19 to FIG. 21.

FIG 19 is the analysis result for area A. FIG 20 is the analysis result for area B. FIG 21 is the analysis result for area C.

The area marked A in FIG. 18 is a carbon coating layer for FIB measurement and does not correspond to the positive electrode active material. Therefore, referring to FIG 19, it can be seen that both Li and B were not observed, and only C (carbon) was observed.

In addition, referring to FIG 20, Li and C were observed on the surface of the positive electrode active material of Example 1, but B was not observed.

Referring to the result of FIG. 20 and the elemental mapping result of FIG. 13 to FIG. 17, it can be seen that amorphous lithium and carbon are positioned in some areas of the surface of the positive electrode active material composed of single particles.

Also, referring to FIG 21, it can be seen that lithium and oxygen are analyzed. That is, it can be seen that lithium metal oxide including a layered structure exists in the center of a single particle.

The present invention is not limited to the exemplary embodiment, but can be manufactured in a variety of different forms, and a person of an ordinary skill in the technical field to which the present invention belongs does not change the technical idea or essential features of the present invention. It will be understood that it can be implemented in other specific forms. Therefore, the exemplary embodiment described above should be understood as illustrative in all respects and not limiting.

**Claims**

1. A positive electrode active material, is:

   a metal oxide particle including a center and a surface portion positioned on the surface of the center, composed of single particle, and
   wherein, the surface portion includes a film in which no peak is observed during XRD measurement.

2. The positive electrode active material of claim 1, wherein:
   the film contains a compound of amorphous structure.

3. The positive electrode active material of claim 2, wherein:
   the compound of amorphous structure contains carbon and lithium.

4. The positive electrode active material of claim 1, wherein:
   the surface portion includes an amorphous structure and a rock salt structure.

5. The positive electrode active material of claim 1, wherein:
   the core contains a layered structure.

6. The positive electrode active material of claim 1, wherein:
   a particle strength of the metal oxide particle is 291 MPa or more.

7. The positive electrode active material of claim 1, wherein:
   a grain size of the metal oxide particle ranges from 2,500 Å to 5,000 Å.

8. The positive electrode active material of claim 1, wherein:
   a specific surface area (BET) of the metal oxide particle is less than 0.35 m/g.

9. The positive electrode active material of claim 1, wherein:
   based on the entire positive electrode active material, the ratio of particles with an average particle diameter of $2\mu m$ or less is 2.5% or less.

10. The positive electrode active material of claim 1, wherein:
    based on the entire positive electrode active material, the ratio of particles with an average particle diameter of $10\mu m$ or more is 3% or less.

11. The positive electrode active material of claim 1, wherein:
    a D50 particle diameter of the metal oxide particle is 5.5 $\mu$m or less.

**12.** The positive electrode active material of claim 1, wherein:
the metal oxide particle contains nickel, cobalt, manganese and a doping element.

**13.** The positive electrode active material of claim 12, wherein:
the doping element is one or more selected from the group consisting of Zr, Al, B, P, La, Ta, Ti, W, Mo, Si, Ga, Zn, Nb, Ag, Sn, Bi, Au, Y, Ge, V, Cr, and Fe.

**14.** The positive electrode active material of claim 12, wherein:
a content of the doping element ranges from 0.0005 mole to 0.04 mole, based on 1 mole of the total of the nickel, cobalt, manganese and the doping element.

**15.** The positive electrode active material of claim 12, wherein:
the doping element include Zr and Al.

**16.** The positive electrode active material of claim 15, wherein:
a content of the Zr ranges from 0.001 mole to 0.01 mole, based on 1 mole of the total of the nickel, cobalt, manganese and the doping element.

**17.** The positive electrode active material of claim 15, wherein:
a content of the Al ranges from 0.001 mole to 0.04 mole, based on 1 mole of the total of the nickel, cobalt, manganese and the doping element.

**18.** The positive electrode active material of claim 12, wherein:
a content of nickel in the metal oxide particle is 0.8 mol or more, based on 1 mol of the total of the nickel, cobalt and manganese.

**19.** A manufacturing method of positive electrode active material, comprising:

preparing a metal salt aqueous solution containing nickel raw material, cobalt raw material, manganese raw material and water;
obtaining a metal hydroxide by supplying the metal salt aqueous solution to a co-precipitation reactor;
obtaining a lithium metal oxide by mixing the metal hydroxide, a lithium raw material, a doping raw material and a boron compound and then sintering them; and
washing with water after disintegrating the sintered lithium metal oxide.

**20.** The method of claim 19, wherein:
in the step of obtaining the lithium metal oxide, the boron compound is mixed by inputting it in the range of 0.003 mole to 0.03 mole based on 1 mole of the total of nickel, cobalt, manganese and the doping element in the finally obtained positive electrode active material.

**21.** The method of claim 19, wherein:
in the step of obtaining the lithium metal oxide, a molar ratio (Li/Me) of lithium (Li) to the entire metal (Me) excluding lithium ranges from 1.01 to 1.1.

**22.** The method of claim 19, wherein:
in the step of obtaining the lithium metal oxide, the sintering is performed for 10 hours to 24 hours in the 830 °C to 890 °C range.

**23.** The method of claim 19, wherein:
after disintegrating the sintered lithium metal oxide and washing with water, a step of secondary sintering by mixing the washed lithium metal oxide and lithium raw material and then sintering them, is further comprised.

**24.** The method of claim 23, wherein:
the step of secondary sintering is performed for 3 hours to 10 hours at 730°C to 800°C range.

**25.** The method of claim 23, wherein:
in the step of the secondary sintering, a mixing amount of the lithium raw material ranges from 0.3g to 5g based on 100g of the washed lithium metal oxide.

26. A lithium secondary battery, comprising:

a positive electrode comprising the positive electrode active material of any one of claims 1 to 18;
a negative electrode; and
a non-aqueous electrolyte.

【FIG. 1】

【FIG. 2】

sintering

disinte-
gration

washing

【FIG. 3A】

【FIG. 3B】

【FIG. 4】

【FIG. 5】

【FIG. 6】

【FIG. 7】

【FIG. 8】

【FIG. 9】

【FIG. 10】

【FIG. 11】

【FIG. 12】

【FIG. 13】

【FIG. 14】

Co K series

1μm

【FIG. 15】

Mn K series

1μm

【FIG. 16】

Zr K series

1μm

【FIG. 17】

Al K series

1μm

【FIG. 18】

【FIG. 19】

【FIG. 20】

【FIG. 21】

### INTERNATIONAL SEARCH REPORT

| International application No. |
| --- |
| **PCT/KR2021/018831** |

| **A.** | **CLASSIFICATION OF SUBJECT MATTER** |
| --- | --- |

**H01M 4/36**(2006.01)i; **H01M 4/525**(2010.01)i; **H01M 4/505**(2010.01)i; **H01M 4/62**(2006.01)i; **C01G 53/00**(2006.01)i; **H01M 10/052**(2010.01)i

According to International Patent Classification (IPC) or to both national classification and IPC

| **B.** | **FIELDS SEARCHED** |
| --- | --- |

Minimum documentation searched (classification system followed by classification symbols)

H01M 4/36(2006.01); H01M 10/052(2010.01); H01M 4/131(2010.01); H01M 4/48(2010.01); H01M 4/485(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 금속 산화물(metal oxide), 중심부(core portion), 표면부(surface portion), 단입자 (single particle), 피막(coating), 양극 활물질(positive electrode active material), 리튬 이차 전지(lithium secondary battery)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| Y | KR 10-2019-0117199 A (LG CHEM, LTD.) 16 October 2019 (2019-10-16)<br>See claims 1-14; and paragraphs [0031], [0038]-[0043], [0046], [0054], [0078] and [0106]. | 1-26 |
| Y | KR 10-2018-0090211 A (LG CHEM, LTD.) 10 August 2018 (2018-08-10)<br>See claims 1-15; and paragraphs [0043] and [0045]. | 1-18,26 |
| Y | KR 10-2020-0059164 A (LG CHEM, LTD.) 28 May 2020 (2020-05-28)<br>See claims 6-9; paragraphs [0042]-[0045], [0051]-[0054], [0092]-[0096], [0154]-[0158] and [0183]. | 19-25 |
| Y | KR 10-2019-0131842 A (LG CHEM, LTD.) 27 November 2019 (2019-11-27)<br>See claim 11; and paragraphs [0087]-[0090]. | 23-25 |
| A | KR 10-2012-0081808 A (SAMSUNG SDI CO., LTD.) 20 July 2012 (2012-07-20)<br>See entire document. | 1-26 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 March 2022** | **18 March 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/018831**

| Patent document cited in search report | | | Publication date (day/month/year) | Patent family member(s) | | | Publication date (day/month/year) |
|---|---|---|---|---|---|---|---|
| KR | 10-2019-0117199 | A | 16 October 2019 | CN | 111902978 | A | 06 November 2020 |
| | | | | EP | 3761415 | A1 | 06 January 2021 |
| | | | | US | 2021-0020902 | A1 | 21 January 2021 |
| | | | | WO | 2019-194510 | A1 | 10 October 2019 |
| KR | 10-2018-0090211 | A | 10 August 2018 | CN | 109643794 | A | 16 April 2019 |
| | | | | CN | 109643794 | B | 23 November 2021 |
| | | | | EP | 3486979 | A1 | 22 May 2019 |
| | | | | EP | 3486979 | B1 | 14 October 2020 |
| | | | | KR | 10-2187969 | B1 | 07 December 2020 |
| | | | | PL | 3486979 | T3 | 25 January 2021 |
| | | | | US | 11121357 | B2 | 14 September 2021 |
| | | | | US | 2019-0165362 | A1 | 30 May 2019 |
| | | | | WO | 2018-143734 | A1 | 09 August 2018 |
| KR | 10-2020-0059164 | A | 28 May 2020 | CN | 113169329 | A | 23 July 2021 |
| | | | | EP | 3869594 | A1 | 25 August 2021 |
| | | | | KR | 10-2327532 | B1 | 17 November 2021 |
| | | | | US | 2021-0408537 | A1 | 30 December 2021 |
| KR | 10-2019-0131842 | A | 27 November 2019 | CN | 111819718 | A | 23 October 2020 |
| | | | | EP | 3751646 | A1 | 16 December 2020 |
| | | | | JP | 2021-516424 | A | 01 July 2021 |
| | | | | US | 2021-0135187 | A1 | 06 May 2021 |
| | | | | WO | 2019-221497 | A1 | 21 November 2019 |
| KR | 10-2012-0081808 | A | 20 July 2012 | CN | 102593456 | A | 18 July 2012 |
| | | | | CN | 102593456 | B | 02 March 2016 |
| | | | | EP | 2477258 | A1 | 18 July 2012 |
| | | | | EP | 2477258 | B1 | 23 June 2021 |
| | | | | JP | 2012-146662 | A | 02 August 2012 |
| | | | | JP | 6116800 | B2 | 19 April 2017 |
| | | | | KR | 10-1264333 | B1 | 14 May 2013 |
| | | | | US | 2012-0177994 | A1 | 12 July 2012 |
| | | | | US | 9077023 | B2 | 07 July 2015 |

Form PCT/ISA/210 (patent family annex) (July 2019)